(19) Europäisches Patentamt
European Patent Office
Office européen des brevets

(11) **EP 3 885 935 A1**

(12) **EUROPEAN PATENT APPLICATION**

(43) Date of publication:
**29.09.2021 Bulletin 2021/39**

(51) Int Cl.:
**G06F 16/583** (2019.01)   **G06F 16/332** (2019.01)

(21) Application number: **21275029.3**

(22) Date of filing: **16.03.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.06.2020 CN 202010603698**

(71) Applicant: **BEIJING BAIDU NETCOM SCIENCE AND TECHNOLOGY CO. LTD.**
**100085 Beijing (CN)**

(72) Inventors:
• QIN, Xiameng
  Haidian District, Beijing 100085 (CN)
• LI, Yulin
  Haidian District, Beijing 100085 (CN)
• HUANG, Ju
  Haidian District, Beijing 100085 (CN)
• XIE, Qunyi
  Haidian District, Beijing 100085 (CN)
• HAN, Junyu
  Haidian District, Beijing 100085 (CN)

(74) Representative: **Wilson Gunn**
**Blackfriars House**
**The Parsonage**
**5th Floor**
**Manchester M3 2JA (GB)**

(54) **IMAGE QUESTIONING AND ANSWERING METHOD, APPARATUS, DEVICE AND STORAGE MEDIUM**

(57)   The present application discloses an image questioning and answering method, apparatus, device and storage medium, relating to the technical field of image processing, computer vision, deep learning and natural language processing. The specific implementation solution is as follows: constructing a question graph with a topological structure and extracting a question feature of a query sentence, according to the query sentence; constructing a visual graph with a topological structure and a text graph with a topological structure according to a target image corresponding to the query sentence; performing fusion on the visual graph, the text graph and the question graph by using a fusion model, to obtain a final fusion graph; and determining reply information of the query sentence according to a reasoning feature extracted from the final fusion graph and the question feature.

```
                                              ┌─ S10
┌──────────────────────────────────────────┐
│ constructing a question graph with a       │
│ topological structure and extracting a     │
│ question feature of a query sentence,      │
│ according to the query sentence            │
└──────────────────────────────────────────┘
                    │
                    ▼                         ┌─ S20
┌──────────────────────────────────────────┐
│ constructing a visual graph with a         │
│ topological structure and a text graph     │
│ with a topological structure according to  │
│ a target image corresponding to the        │
│ query sentence                             │
└──────────────────────────────────────────┘
                    │
                    ▼                         ┌─ S30
┌──────────────────────────────────────────┐
│ performing fusion on the visual graph,     │
│ the text graph and the question graph by   │
│ using a fusion model, to obtain a final    │
│ fusion graph                               │
└──────────────────────────────────────────┘
                    │
                    ▼                         ┌─ S40
┌──────────────────────────────────────────┐
│ determining reply information of the       │
│ query sentence according to a reasoning    │
│ feature extracted from the final fusion    │
│ graph and the question feature             │
└──────────────────────────────────────────┘
```

**FIG. 1**

EP 3 885 935 A1

**Description**

**TECHNICAL FIELD**

The present application relates to the technical field of image processing, and in particular to the technical fields of computer vision, deep learning and natural language processing.

**BACKGROUND**

In existing image questioning and answering technologies, a query sentence usually contains a large number of colloquial descriptions, and there are usually more targets in an image corresponding to the query sentence.

**SUMMARY**

The present application provides an image questioning and answering method, apparatus, device and storage medium.

According to an aspect of the present application, there is provided an image questioning and answering method, including:

constructing a question graph with a topological structure and extracting a question feature of a query sentence, according to the query sentence;

constructing a visual graph with a topological structure and a text graph with a topological structure according to a target image corresponding to the query sentence;

performing fusion on the visual graph, the text graph and the question graph by using a fusion model, to obtain a final fusion graph; and

determining reply information of the query sentence according to a reasoning feature extracted from the final fusion graph and the question feature.

According to another aspect of the present application, there is provided an image questioning and answering apparatus, including:

a query sentence module configured for constructing a question graph and extracting a question feature of a query sentence, according to the query sentence;

an image module configured for constructing a visual graph and a text graph according to a target image corresponding to the query sentence;

a fusion module configured for performing fusion on the visual graph, the text graph and the question graph by using a fusion model, to obtain a final fusion graph; and

a determining module configured for determining reply information of the query sentence according to a reasoning feature extracted from the final fusion graph and the question feature.

According to another aspect of the present application, there is provided an electronic device. A function of the electronic device may be realized through hardware, or may also be realized by executing corresponding software through the hardware. The hardware or the software may include one or more modules corresponding to the above function.

In a possible design, a structure of the electronic device may include a processor and a memory. The memory is used to store a program that supports the electronic device to execute the above image questioning and answering method. The processor is configured to execute the program stored in the memory. The electronic device may further include a communication interface for communicating with another device or a communication network.

According to another aspect of the present application, there is provided a non-transitory computer-readable storage medium storing computer instructions, which is configured for storing an electronic device and computer software instructions used by the electronic device, including a program involved in executing the above image questioning and answering method.

It is to be understood that the contents in this section are not intended to identify the key or critical features of the embodiments of the present application, and are not intended to limit the scope of the present application. Other features of the present application will become readily apparent from the following description.

**BRIEF DESCRIPTION OF THE DRAWINGS**

The drawings are included to provide a better understanding of the application and are not to be construed as limiting the application. Wherein:

FIG. 1 is a schematic diagram of an image questioning and answering method according to an embodiment of the present application;
FIG. 2 is a schematic diagram of a step S10 of an image questioning and answering method according to an embodiment of the present application;
FIG. 3 is a schematic diagram of a step S10 of an image questioning and answering method according to another embodiment of the present application;
FIG. 4 is a schematic diagram of application of an embodiment of the present application;
FIG. 5 is a schematic diagram of a step S20 of an image questioning and answering method according to an embodiment of the present application;
FIG. 6 is a schematic diagram of a step S20 of an image questioning and answering method according to another embodiment of the present application;
FIG. 7 is a schematic diagram of a step S20 of an image questioning and answering method according to another embodiment of the present application;
FIG. 8 is a schematic diagram of a step S20 of an image questioning and answering method according to another embodiment of the present application;
FIG. 9 is a schematic diagram of a step S30 of an image questioning and answering method according to an embodiment of the present application;
FIG. 10 is a schematic diagram of application of an embodiment of the present application;
FIG. 11 is a schematic diagram of an image questioning and answering method according to another embodiment of the present application;
FIG. 12 is a schematic diagram of application of an embodiment of the present application;
FIG. 13 is a schematic diagram of an image questioning and answering apparatus according to an embodiment of the present application;
FIG. 14 is a block diagram of an electronic device for implementing an image questioning and answering method according to an embodiment of the present application.

**DETAILED DESCRIPTION**

The exemplary embodiments of the present application are described below in combination with the accompanying drawings, which include various details of the embodiments of the present application to facilitate understanding, and should be considered as merely exemplary. Accordingly, a person skilled in the art should appreciate that various changes and modifications can be made to the embodiments described herein without departing from the scope and spirit of the present application. Also, descriptions of well-known functions and structures are omitted from the following description for clarity and conciseness.

In existing image questioning and answering technologies, a query sentence usually contains a large number of colloquial descriptions, and there are usually more targets in an image corresponding to the query sentence, it is difficult to quickly and accurately understand a question and to accurately deduce a corresponding answer from the image.

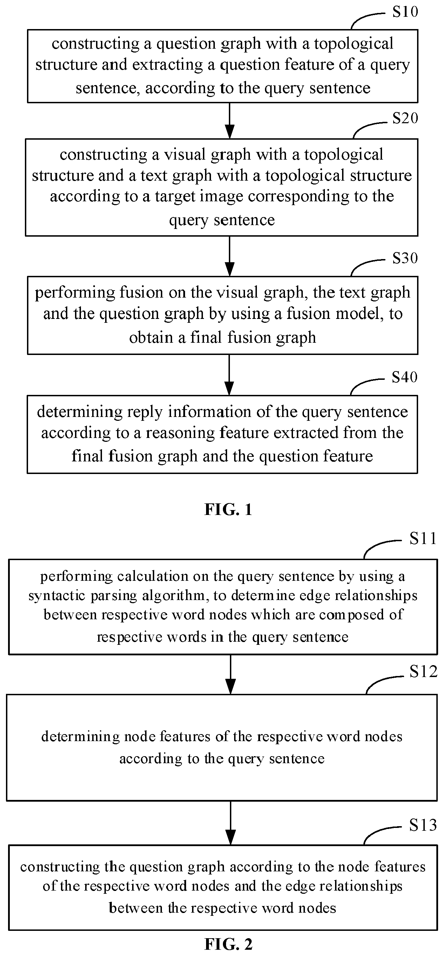

According to an embodiment of the present application, as shown in FIG. 1, the present application provides an image questioning and answering method, including:

S10: constructing a question graph with a topological structure and extracting a question feature of a query sentence, according to the query sentence.

The query sentence may include any content that a question is asked about an image. The query sentence may be a sentence in the form of speech, or may also be a sentence in the form of text. For example, the query sentence may be "How many men are there in the graph?".

The question graph may be understood as a topological graph constructed by edge relationships between nodes. Specific nodes in the topological graph, the features corresponding to the nodes, and the edge relationships between the nodes can be customized according to the query sentence.

The question feature may include any features for representing the intent or semantics of the query sentence. The extraction way of the question feature and the dimension of the question feature can be selected and adjusted as required, as long as the obtained question feature can represent the content related to the query sentence.

S20: constructing a visual graph with a topological structure and a text graph with a topological structure according to a target image corresponding to the query sentence.

The target image can be understood as a target to be asked with respect to the query sentence. The target image may be one or more.

The visual graph may be understood as a topological graph constructed by edge relationships between nodes. Specific nodes in the topological graph, the features corresponding to the nodes, and the edge relationships between the nodes can be customized according to a target. The visual graph may be used to represent the topological relationship of visual-related content of each target recognized in the target image.

The text graph may be understood as a topological graph constructed by edge relationships between nodes. Specific nodes in the topological graph, the features corresponding to the nodes, and the edge relationships between the nodes can be customized according to a target. The text graph may be used to represent the topological relationship of categories and mutual relevance of respective targets recognized in the target image.

S30: performing fusion on the visual graph, the text graph and the question graph by using a fusion model, to obtain a final fusion graph.

The fusion model can adopt any neural network model in the prior art, as long as the fusion of topological graphs in different modalities can be realized.

The final fusion graph can contain a node feature and/or a node edge relationship of each node in the visual graph, a node feature and/or a node edge relationship of each node in the text graph, and a node feature and/or a node edge relationship of each node in the question graph.

S40: determining reply information of the query sentence according to a reasoning feature extracted from the final fusion graph and the question feature.

The reasoning feature may be understood as a feature that represents the relationship between the query sentence and the target image. The reply information may be understood as an answer to the query sentence based on the intent of the query sentence and the image content in the target image. For example, when the query sentence is "How many men are there in the graph?", the reply information may be "There are three men in the graph".

The technology according to the present application solves the problem in the prior art that an answer corresponding to a query sentence cannot be accurately deduced from an image. In an embodiment of the present application, since the visual graph, the text graph, and the question graph constructed based on the target image and the query sentence are fused across modalities, points of focus of the target image in different modalities can be obtained, so that on this basis, the answer to image questioning and answering can be recognized more accurately according to the intent of the query sentence.

The technology according to the present application solves the problem in the prior art that an answer corresponding to a query sentence cannot be accurately deduced from an image. In the embodiment of the present application, points of focus in different modalities can be learned by constructing the visual graph and the question graph, thereby reducing the noise caused by images containing a plurality of targets and complex questions. Meanwhile, visual semantic relationships between respective targets on the target image can be explicitly expressed by constructing a text graph, thereby improving the ability of relational reasoning. Meanwhile, because the visual graph, the text graph and the question graph constructed based on the target image and the query sentence are fused across modalities, it can be realized that the answer to image questioning and answering can be recognized more accurately through multi-step relation reasoning, according to the points of focus of the target image in different modalities and the intent of the query sentence.

In one implementation, as shown in FIG. 2, the constructing the question graph based on the query sentence may include:

S11: performing calculation on the query sentence by using a syntactic parsing algorithm, to determine edge relationships between respective word nodes which are composed of respective words in the query sentence.

The words in the query sentence can be recognized and confirmed according to the way in the prior art. The words can include single characters, single letters, respective words, vocabulary, etc.

The syntactic parsing algorithm is used to analyze the structured syntactic dependency in the query sentence. The edge relationships between respective word nodes is determined according to a syntactic relationship obtained through analysis. The edge $E^n$ of the question graph may be expressed as $E^n = \{0,1\}^{K_2 * K_2}$ in binary format, where $k_2$ represents the number of nodes, and n represents the identifier of the question graph.

The syntactic parsing algorithm may adopt any algorithm of natural language processing (NLP), such as dependency parsing, syntactic structure parsing, constituent structure parsing and phrase structure parsing.

S12: determining node features of the respective word nodes according to the query sentence.

The node features of the respective word nodes in the query sentence can be determined by way of word encoding and feature encoding. The word encoding and feature encoding adopted specifically can be selected as needed. For example, Glove (Global Vectors for Word Representation) word encoding and Bi-GRU (Bi Gate Recurrent Unit) feature encoding can be used to obtain the node features $V^n \in \mathbb{R}^{K_2 * 2048}$ of the respective word nodes in the question graph, where $k_2$ represents the number of nodes, and n represents the identifier of the question graph, having no practical meaning.

S13: constructing the question graph according to the node features of the respective word nodes and the edge relationships between the respective word nodes.

In this embodiment, the association relationship between respective words in the query sentence and feature vectors of the respective words can be effectively obtained by constructing the question graph based on the query sentence, so as to further accurately determine the points of focus of the query sentence.

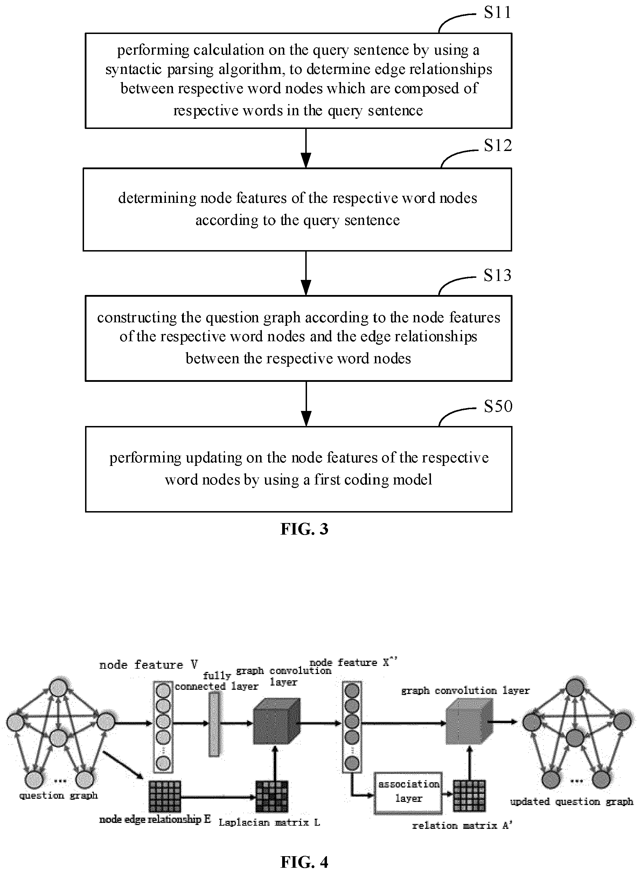

In one implementation, as shown in FIG. 3, the image questioning and answering method may further include: S50: performing updating on the node features of the respective word nodes by using a first coding model.

The first coding network can adopt any neural network structure, as long as the node features of the respective word nodes in the question graph can be updated.

The first coding model can update the node features of the respective word nodes in the question graph by performing calculation on the node features of the word nodes in the question graph and the edge relationships between the word nodes, such that the node features of the respective side nodes on each side in the question graph are more accurate.

In an example, as shown in FIG. 4, the performing updating on the node features of the respective word nodes by using a first coding model, may include:

inputting the constructed question graph into a fully connected layer of the first coding model, and mapping the node feature V of each word node in the question graph to the node feature X with feature dimension d through the fully connected layer, which is specifically expressed as X = σ($W_1$ * V), where V represents the node feature, and $W_1$ represents a parameter of the fully connected layer.

According to the edge relationship E of the question graph, a graph Laplacian L is obtained by using a diagonal matrix and Laplacian transformation.

The graph Laplacian L and the node feature X are inputted into a graph convolution layer (*Gconv$_1$*), to update the node feature of the question graph and to learn an implicit relationship, thereby obtaining the updated node feature X'. Herein, the update strategy of (*Gconv$_1$*) is defined as below:

$$\mathrm{X}' = \sigma\left( W_2\left( \mathrm{X} + W_3\left( \mathrm{L}\,\mathrm{X} \right)\right)\right) \; ;$$

$$\mathrm{L} = (D)^{-1/2}\; E\; (D)^{1/2};$$

$$\mathrm{D} = \sum_{j \in K_1} e_{ij}, \; e_{ij} \in E;$$

where, $\mathrm{D} \in \mathbb{R}^{K_1 * K_1}$, representing a diagonal matrix, $k_1$ represents the number of the nodes, $W_2$ represents a learnable parameter, $W_3$ represents a learnable parameter, i represents a serial number of the node, and j represents a serial number of the node.

The updated node feature X' is inputted into a correlation layer (Adj), to learn an implicit relationship matrix *A'* between the respective nodes by using the correlation layer. The specific expression is as follows:

$$A' = \{a'_{ij}\}, \; i, j \in [1, \ldots, K_1];$$

$$a'_{ij} = \frac{exp^{SIM(x'_i, x'_j)}}{\sum_{j \in K_1} exp^{SIM(x'_i, x'_j)}};$$

$$SIM\left(x'_i, x'_j\right) = \|\, x'_i - x'_j \,\|_2^2;$$

where, i represents a serial number of the node, j represents a serial number of the node, and $k_1$ represents the number of the nodes.

The updated node feature X' and the relationship matrix *A'* are inputted into another graph convolution layer (*Gconv$_2$*). The node feature X' is updated again through this graph convolution layer, to obtain the node feature *X"*. The update strategy of $Gconv_2$ is defined as follows: $X'' = X' + W_4(A'X')$, where $W_4$ represents a learnable parameter.

The updating of the question graph is completed based on the update results of the respective node features.

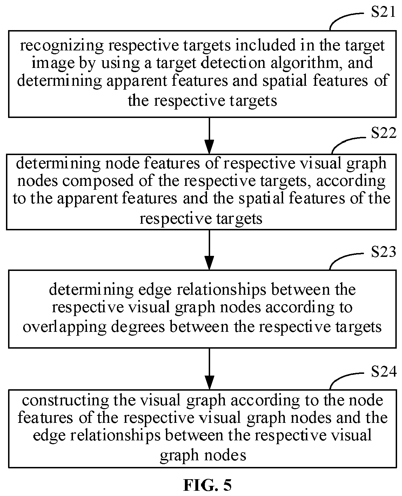

In one implementation, as shown in FIG. 5, the constructing the visual graph according to the target image corresponding to the query sentence, may include:

S21: recognizing respective targets included in the target image by using a target detection algorithm, and determining apparent features and spatial features of the respective targets.

The target detection algorithm can adopt any method in image identification, as long as that the recognition of the target in the image can be achieved. For example, the target detection algorithm can adopt R-CNN (Region Convolutional Neural Networks), Fast RCNN (Fast Region Convolutional Neural Networks), Faster RCNN (Faster Region Convolutional Neural Networks). The target $K_1$ present in the target image can be detected by the target detection algorithm. Based on the recognized target $K_1$, the apparent feature F of the target $K_1$, $F \in \mathbb{R}^{K_1 * 2048}$, and the spatial feature S, $S \in \mathbb{R}^{K_1 * 4}$ are extracted by using ROI Pooling (region of interest Pooling).

The target included in the target image can be understood as anything in the image. For example, people, buildings, vehicles, animals, etc. in the image can all be considered as targets in the target image.

The spatial feature may include the position, the angle and the like that indicate the recognized target in the image. The apparent feature may include features that represent visually related content of the target, for example, features such as texture, color, and shape, as well as higher-dimensional features.

S22: determining node features of respective visual graph nodes composed of the respective targets, according to the apparent features and the spatial features of the respective targets. The node feature $V^m$ can be expressed as $V^m = \{ F \parallel S \}$, where m represents the identifier of the visual graph, having no actual meaning.

S23: determining edge relationships between the respective visual graph nodes according to overlapping degrees (e.g., intersection over union (IOU)) between the respective targets.

When the IOU between two targets is greater than a set threshold, it is considered that there is an edge relationship between two visual graph nodes. When the IOU between two targets is smaller than the set threshold, it is considered that there is no edge relationship between two visual graph nodes. The edge $E^m$ of the visual graph can be expressed as $E^m = \{0,1\}^{K_1*K_1}$ in binary format, where $k_1$ represents the target, and m represents the identifier of the visual graph, having no actual meaning.

S24: constructing the visual graph according to the node features of the respective visual graph nodes and the edge relationships between the respective visual graph nodes.

In this embodiment, the visual graph constructed based on the target image may be able to effectively obtain the feature vector representing each target in the target image, and the association relationship of visual related features between the respective targets.

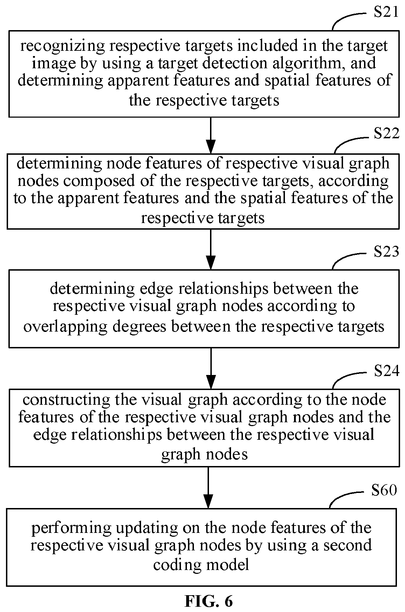

In one implementation, as shown in FIG. 6, the image questioning and answering method may further include:

S60: performing updating on the node features of the respective visual graph nodes by using a second coding model.

The second coding network may adopt the same structure as the first coding network. The process of performing updating on the node features of the respective visual graph nodes in the visual graph by the second coding network is basically consistent with the process of performing updating on the node features of the respective word nodes in the question graph by the first coding network, and will not be repeated here. The specific update process may refer to the above-mentioned first coding network, and the difference between the two is that the input topological graphs are different, that is, the node features and edge relationships of the input nodes are different.

The second coding model can perform updating on the node features of the respective visual graph nodes in the visual graph by calculating the node features of the visual graph nodes in the visual graph and the edge relationships between the visual graph nodes, so that the node features of the respective visual graph nodes in the visual graph are more accurate.

In an example, the first coding network and the second coding network are the same coding network, that is, the node features for the visual graph and the question graph are updated through the same coding network.

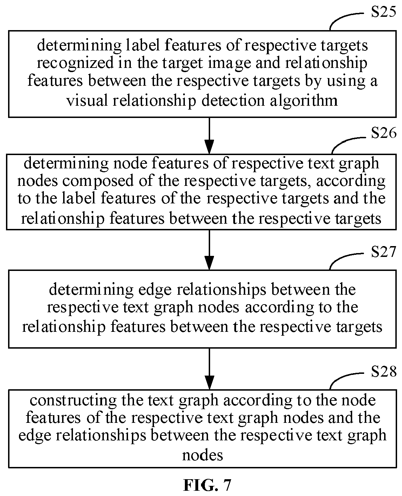

In one implementation, as shown in FIG. 7, the constructing the text graph according to the target image corresponding to the query sentence, may include:

S25: determining label features of respective targets recognized in the target image and relationship features between the respective targets by using a visual relationship detection (VRD) algorithm.

The label feature may include a feature used to indicate the type of the target. For example, it can be determined from the label feature that the target is people, building, or vehicle or the like. The relationship feature between the targets may include a feature for representing the positional relationship between two targets. For example, it can be determined from the relationship features between the targets that the relationship between a first target (a person) and a second target (a bicycle) is the first target being sitting on the second target.

S26: determining node features of respective text graph nodes composed of the respective targets, according to the label features of the respective targets and the relationship features between the respective targets.

S27: determining edge relationships between the respective text graph nodes according to the relationship features between the respective targets.

S28: constructing the text graph according to the node features of the respective text graph nodes and the edge relationships between the respective text graph nodes.

In this implementation, the text graph constructed based on the target image may be able to effectively obtain a label feature representing the category of each target in the target image and the association relationship features between the respective targets.

In an example, labels corresponding to $K_1$ targets in the target image I and the relations existing between every two labels are obtained through the visual relationship detection algorithm. The labels are mapped into label features L by using Glove word encoding and Bi-GRU feature oding, $L \in \mathbb{R}^{K_1 * 2048}$. The relations are mapped into relationship features R by using the Glove word encoding and the Bi-GRU feature encoding, $R \in \mathbb{R}^{K_1 * K_1 * 2048}$. Then, an average sum operation is performed on the obtained relationship features R in accordance with the dimension $K_1$, to obtain a new relationship feature $R' \in \mathbb{R}^{K_1 * 2048}$, and finally the features corresponding to the labels and the relations are merged to obtain the node feature $V^l = L + R'$ of the text graph. The edge $E^l$ of the text graph is constructed based on whether there is a relationship between two objects, which is expressed as $E^l \in \{0,1\}^{K_1 * K_1}$ in binary format.

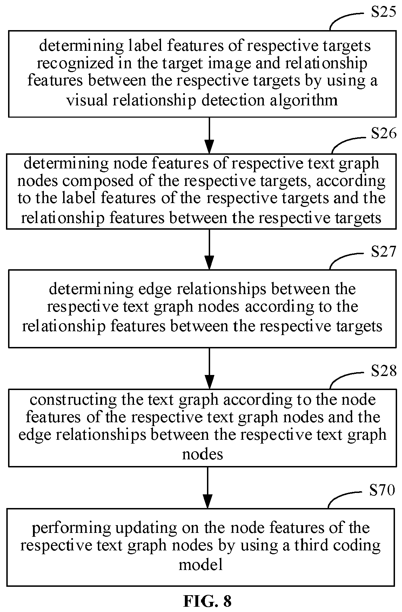

In one implementation, as shown in FIG. 8, the image questioning and answering method may further include: S70: performing updating on the node features of the respective text graph nodes by using a third coding model.

The third coding network may adopt the same structure as the first coding network. The process of performing updating on the node features of the respective text graph nodes in the text graph by the third coding network is consistent with the process of performing updating on the node features of the respective word nodes in the question graph by the first coding network, and will not be repeated here. The specific update process may refer to the above-mentioned first coding network, and the difference between the two is that the input topological graphs are different, that is, the node features and edge relationships of the input nodes are different.

The third coding model can perform updating on the node features of the respective text graph nodes in the text graph by calculating the node features of the text graph nodes in the text graph and the edge relationships between the text graph nodes, so that the node features of the respective text graph nodes in the text graph are more accurate.

In an example, the first coding network and the third coding network are the same coding network, that is, the node features for the text graph and the question graph are updated through the same coding network.

In an example, the first coding network, the second coding network and the third coding network are the same coding network, that is, the node features for the text graph, the visual graph and the question graph are updated through the same coding network.

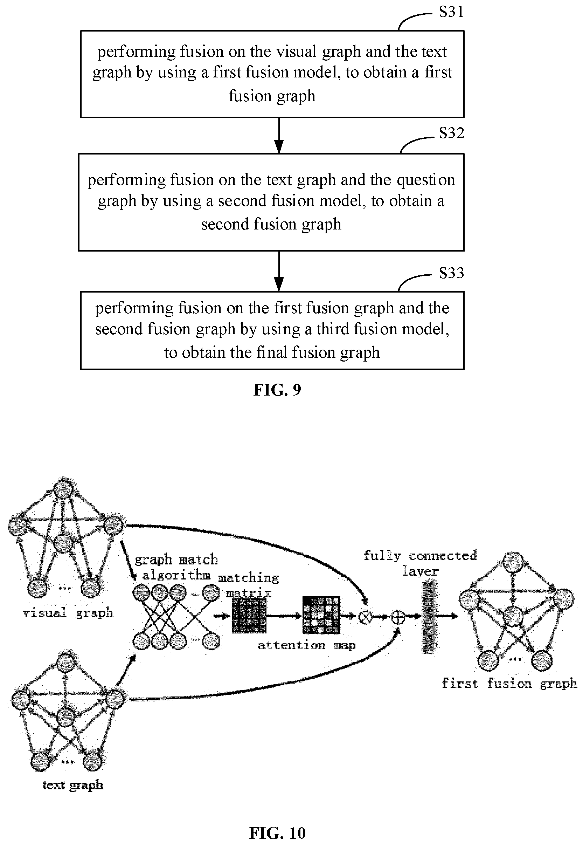

In one implementation, as shown in FIG. 9, the performing the fusion on the visual graph, the text graph and the question graph by using the fusion model, to obtain the final fusion graph, may include:

S31: performing fusion on the visual graph and the text graph by using a first fusion model, to obtain a first fusion graph.

S32: performing fusion on the text graph and the question graph by using a second fusion model, to obtain a second fusion graph.

S33: performing fusion on the first fusion graph and the second fusion graph by using a third fusion model, to obtain the final fusion graph.

In this implementation, since the visual graph, the text graph and the question graph constructed based on the target image and the query sentence are fused across modalities, points of focus of the target image in different modalities can be obtained, so that on this basis, the answer to image questioning and answering can be recognized more accurately according to the intent of the query sentence.

In an example, the first fusion model, the second fusion model and the third fusion model may use the same neural network structure. The first fusion model, the second fusion model and the third fusion model may also be the same fusion model, that is, the above steps S31 to S33 are performed by one fusion model.

In an example, as shown in FIG. 10, the performing fusion on the visual graph and the text graph by using the first fusion model, to obtain the first fusion graph, may include:

The alignment of node features between the visual graph $G_1' = \{X'', E^m\}$ and the text graph $G_2' = \{Y'', E^n\}$ are performed by using a graph match algorithm (Graph Match), so that the feature fusion in different modalities is more accurate. The Graph Match can be expressed as follows:

$$s_{ij} = f_a\left(x_i'', y_j''\right), \quad \{i \in K_1, j \in K_2\};$$

Where, $x_i'' \in X''$, $x_i''$ is expressed as the node feature of the visual graph; $y_j'' \in Y''$, $y_j''$ is expressed as the node feature of the text graph; $K_1$ and $K_2$ represent the number of nodes in the two graphs fused respectively; and $f_a$ can provide a bilinear mapping. It can be expressed specifically as follows:

$$s_{ij} = exp\left(\frac{x_i'' \hat{A}\left(y_j''\right)^T}{\tau}\right) = exp\left(\frac{x_i''(A+A^T)\left(y_j''\right)^T}{2\tau}\right);$$

$$\forall\, i \in K_1, x_i'' \in \mathbb{R}^{1 \times d}, \forall\, j \in K_2, y_i'' \in \mathbb{R}^{1 \times d};$$

where, $A \in \mathbb{R}^{d*d}$ is a learnable matrix parameter, and $\tau$ is a hyperparameter for a numerical problem.

After conducting the graph match algorithm, a matching matrix S = $\{s_{ij}\}^{K_1*K_2}$ of two graph nodes is obtained. Then, a matching relationship-based attention map $S_1$ between the two graph nodes is obtained by using an attention mechanism.

Then, the visual graph and the text graph are fused by using the attention map $S_1$ and inputted into the fully connected layer, to obtain the first fusion graph $G^{f1}$, $G^{f1}$ is expressed as: $G^{f1} = \{V^{f1}, E^{f1}\}$.

The specific fusion strategy for performing fusion on the visual graph and the text graph by using the attention map $S_1$ is as follows:

$$V^{f1} = W_5((S_1 \otimes X'') \oplus Y'');$$

$$E^{f1} = E^n;$$

where, $W_5$ represents a learnable parameter, and n represents an identifier, having no actual meaning.

In an example, the second fusion model may adopt the same structure as the first fusion model. The process of performing fusion on the text graph and the question graph by using the second fusion model is consistent with the process of performing fusion on the visual graph and the text graph by using the first fusion model, and will not be repeated here. The specific fusion process can refer to the above embodiment of the first fusion model.

The third fusion model may adopt the same structure as the first fusion model. The process of performing fusion on the first fusion graph and the second fusion graph by using the third fusion model is consistent with the process of performing fusion on the visual graph and the text graph by using the first fusion model, and will not be repeated here. The specific fusion process can refer to the above embodiment of the first fusion model.

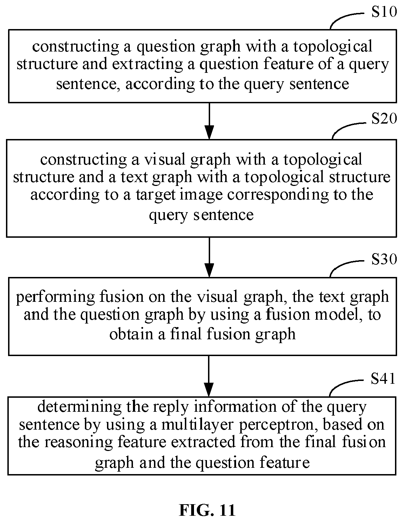

In one implementation, as shown in FIG. 11, the determining the reply information of the query sentence according to the reasoning feature extracted from the final fusion graph and the question feature, may include:

S41: determining the reply information of the query sentence by using a multilayer perceptron (MLP), based on the reasoning feature extracted from the final fusion graph and the question feature.

In this embodiment, the reply information of the query sentence can be accurately deduced through calculation of the reasoning feature and the question feature by the multilayer perceptron.

In an example, the final fusion graph obtains the reasoning feature required for generation of the final answer through a max pooling operation.

In an example, the extracting the question feature of the query sentence according to the query sentence, may include:

determining the question feature of a target sentence, by performing processing on the query sentence using word embedding and Bi-GRU feature encoding.

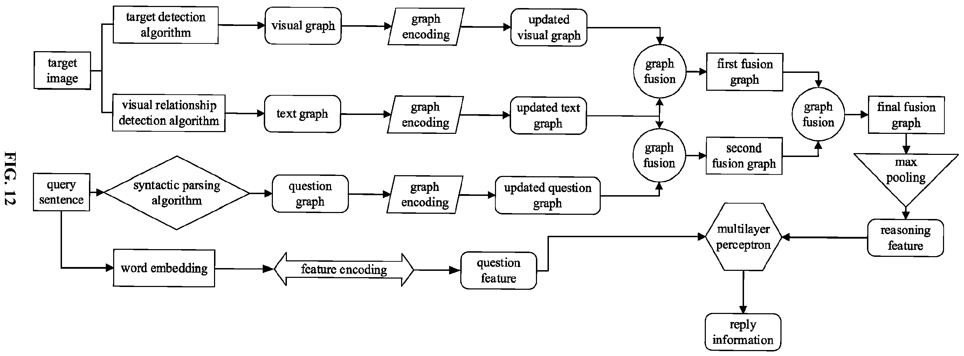

In an example, as shown in FIG. 12, the image questioning and answering method may include:

constructing a question graph by using a dependency syntactic parsing algorithm and the query sentence, and performing updating on the node features of the respective word nodes by using a first coding model, to obtain the updated question graph;

constructing a visual graph by using Faster RCNN and the target image, and performing updating on the node features of the respective visual graph nodes by using the second coding model, to obtain the updated visual graph;

constructing a text graph by a visual relationship detection algorithm and the target image, and performing updating on the node features of the respective text graph nodes by using a third coding model, to obtain the updated text graph;

performing fusion on the visual graph and the text graph by using a first fusion model, to obtain a first fusion graph, performing fusion on the text graph and the question graph by using a second fusion model, to obtain a second fusion graph, and performing fusion on the first fusion graph and the second fusion graph by using a third fusion model, to obtain the final fusion graph;

the final fusion graph obtains the reasoning feature required for generation of the final answer through a max pooling operation;

determining a question feature of the target sentence by word embedding and Bi-GRU feature encoding;

determining the reply information of the query sentence by using a multilayer perceptron, based on the reasoning feature extracted from the final fusion graph and the question feature.

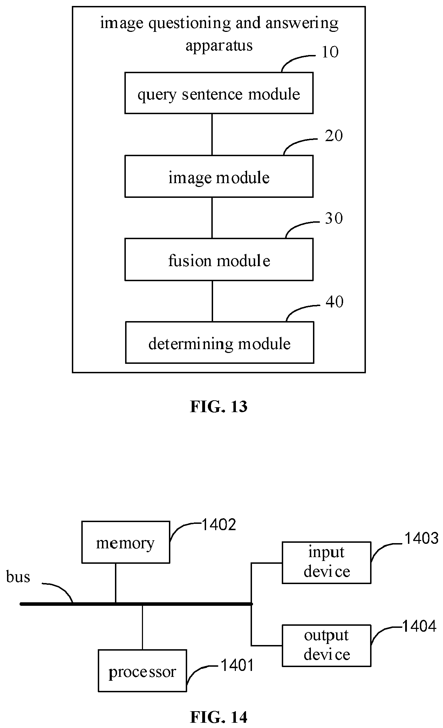

According to an embodiment of the present application, as shown in FIG. 13, there is provided an image questioning and answering apparatus, including:

a query sentence module 10 configured for constructing a question graph and extracting a question feature of a query sentence, according to the query sentence;

an image module 20 configured for constructing a visual graph and a text graph according to a target image corresponding to the query sentence;

a fusion module 30 configured for performing fusion on the visual graph, the text graph and the question graph by using a fusion model, to obtain a final fusion graph; and

a determining module 40 configured for determining reply information of the query sentence according to a reasoning feature extracted from the final fusion graph and the question feature.

In one implementation, the fusion module 30 may include:

a first fusion sub-module configured for performing fusion on the visual graph and the text graph by using a first fusion model, to obtain a first fusion graph;

a second fusion sub-module configured for performing fusion on the text graph and the question graph by using a second fusion model, to obtain a second fusion graph; and

a third fusion sub-module configured for performing fusion on the first fusion graph and the second fusion graph by using a third fusion model, to obtain the final fusion graph.

In one implementation, the query sentence module 10 may include:

a first determining sub-module configured for performing calculation on the query sentence by using a syntactic parsing algorithm, to determine edge relationships between respective word nodes which are composed of respective words in the query sentence;

a second determining sub-module configured for determining node features of the respective word nodes according to the query sentence; and

a first constructing sub-module configured for constructing the question graph according to the node features of the respective word nodes and the edge relationships between the respective word nodes.

In one implementation, the image questioning and answering apparatus may further include:

a first updating module configured for performing updating on the node features of the respective word nodes by using a first coding model.

In one implementation, the image module 20 may include:

a third determining sub-module configured for recognizing respective targets included in the target image by using a target detection algorithm, and determining apparent features and spatial features of the respective targets;

a fourth determining sub-module configured for determining node features of respective visual graph nodes composed of the respective targets, according to the apparent features and the spatial features of the respective targets;

a fifth determining sub-module configured for determining edge relationships between the respective visual graph nodes according to overlapping degrees between the respective targets; and

a second constructing sub-module configured for constructing the visual graph according to the node features of the respective visual graph nodes and the edge relationships between the respective visual graph nodes.

In one implementation, the image questioning and answering apparatus may further include:
a second updating module configured for performing updating on the node features of the respective visual graph nodes by using a second coding model.

In one implementation, the image module 20 may include:

a sixth determining sub-module configured for determining label features of respective targets recognized in the target image and relationship features between the respective targets by using a visual relationship detection algorithm;

a seventh determining sub-module configured for determining node features of respective text graph nodes composed of the respective targets, according to the label features of the respective targets and the relationship features between the respective targets;

an eighth determining sub-module configured for determining edge relationships between the respective text graph nodes according to the relationship features between the respective targets; and

a third constructing sub-module configured for constructing the text graph according to the node features of the respective text graph nodes and the edge relationships between the respective text graph nodes.

In one implementation, the image questioning and answering apparatus may further include:
a third updating module configured for performing updating on the node features of the respective text graph nodes by using a third coding model.

In one implementation, the determining module 40 may include:
a ninth determining sub-module configured for determining the reply information of the query sentence by using a multilayer perceptron, based on the reasoning feature extracted from the final fusion graph and the question feature.

The function of the above image questioning and answering apparatus in the present application can refer to the various embodiments of the above image questioning and answering method.

According to the embodiment of the present application, the present application also provides an electronic device and a readable storage medium.

FIG. 14 is a block diagram of an electronic device for implementing an image questioning and answering method according to an embodiment of the present application. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as a personal digital assistant, a cellular telephone, a smart phone, a wearable device, and other similar computing devices. The components shown herein, their connections and relationships, and their functions are by way of example only and are not intended to limit the implementations of the application described and/or claimed herein.

As shown in FIG. 14, the electronic device may include one or more processors 1401, a memory 1402, and interfaces for connecting the respective components, including high-speed interfaces and low-speed interfaces. The respective components are interconnected by different buses and may be mounted on a common main-board or otherwise as desired. The processor may process instructions executed within the electronic device, including instructions stored in or on the memory to display graphical information of a graphical user interface (GUI) on an external input/output device, such as a display device coupled to the interface. In other implementations, a plurality of processors and/or buses may be used with a plurality of memories, if necessary. Also, a plurality of electronic devices may be connected, each providing some of the necessary operations (e.g., as an array of servers, a set of blade servers, or a multiprocessor system). An example of a processor 1401 is shown in Fig. 14.

The memory 1402 is a non-transitory computer-readable storage medium provided herein. The memory stores instructions executable by at least one processor to enable the at least one processor to implement the image questioning and answering method provided herein. The non-transitory computer-readable storage medium of the present application stores computer instructions for enabling a computer to implement the image questioning and answering method provided herein.

The memory 1402, as a non-transitory computer-readable storage medium, may be configured to store non-transitory software programs, non-transitory computer-executable programs, and modules, such as program instructions/modules corresponding to the image questioning and answering method in the embodiments of the present application (e.g., the query sentence module 10, the image module 20, the fusion module 30 and the determining module 40 shown in FIG. 13). The processor 1401 executes various functional applications and data processing of the electronic device by running the non-transitory software programs, instructions and modules stored in the memory 1402, that is, implements the image questioning and answering method in the foregoing method embodiment.

The memory 1402 may include a program storage area and a data storage area, wherein the program storage area may store an operating system, and an application program required for at least one function; and the data storage area may store data created according to the use of the electronic device for image questioning and answering, etc. In addition, the memory 1402 may include a high speed random access memory, and may also include a non-transitory memory, such as at least one disk storage device, a flash memory device, or other non-transitory solid state memory device. In some embodiments, the memory 1402 may optionally include a memory remotely located with respect to the processor 1401, which may be connected, via a network, to the electronic device for image questioning and answering. Examples of such networks may include, but are not limited to, the Internet, an intranet, a local area network, a mobile communication network and combinations thereof.

The electronic device for the image questioning and answering method may further include an input device 1403 and an output device 1404. The processor 1401, the memory 1402, the input device 1403, and the output device 1404 may be connected by a bus or other means, exemplified by a bus connection in FIG. 14.

The input device 1403 may receive input numeric or character information, and generate a key signal input related to a user setting and a functional control of an electronic device for image questioning and answering. For example, the input device may be a touch screen, a keypad, a mouse, a track pad, a touch pad, a pointer stick, one or more mouse buttons, a track ball, a joystick, and other input devices. The output device 1404 may include a display device, an auxiliary lighting device (e.g., a light emitting diode (LED)), a tactile feedback device (e.g., a vibrating motor), etc. The display device may include, but is not limited to, a liquid crystal display (LCD), an LED display, and a plasma display. In some embodiments, the display device may be a touch screen.

Various implementations of the systems and techniques described herein may be implemented in a digital electronic circuit system, an integrated circuit system, an application specific integrated circuit (ASIC), a computer hardware, a firmware, a software, and/or a combination thereof. These various implementations may include an implementation in one or more computer programs, which can be executed and/or interpreted on a programmable system including at least one programmable processor; the programmable processor may be a dedicated or general-purpose programmable processor and capable of receiving and transmitting data and instructions from and to a storage system, at least one input device, and at least one output device.

These computing programs (also referred to as programs, software, software applications, or codes) may include machine instructions of a programmable processor, and may be implemented using high-level procedural and/or object-oriented programming languages, and/or assembly/machine languages. As used herein, the terms "machine-readable medium" and "computer-readable medium" may refer to any computer program product, apparatus, and/or device (e.g., a magnetic disk, an optical disk, a memory, a programmable logic device (PLD)) for providing machine instructions and/or data to a programmable processor, including a machine-readable medium that receives machine instructions as machine-readable signals. The term "machine-readable signal" may refer to any signal used to provide machine instructions and/or data to a programmable processor.

In order to provide an interaction with a user, the system and technology described here may be implemented on a computer having: a display device (e. g., a cathode ray tube (CRT) or a liquid crystal display (LCD) monitor) for displaying information to the user; and a keyboard and a pointing device (e. g., a mouse or a trackball), through which the user can provide an input to the computer. Other kinds of devices can also provide an interaction with the user. For example, a feedback provided to the user may be any form of sensory feedback (e.g., visual feedback, auditory feedback, or tactile feedback); and an input from the user may be received in any form, including an acoustic input, a voice input or a tactile input.

The systems and techniques described herein may be implemented in a computing system (e.g., as a data server) that may include a background component, or a computing system (e.g., an application server) that may include a middleware component, or a computing system (e.g., a user computer having a graphical user interface or a web browser through which a user may interact with embodiments of the systems and techniques described herein) that may include a front-end component, or a computing system that may include any combination of such background components, middleware components, or front-end components. The components of the system may be connected to each other through a digital data communication in any form or medium (e.g., a communication network). Examples of the communication network may include a local area network (LAN), a wide area network (WAN), and the Internet.

The computer system may include a client and a server. The client and the server are typically remote from each other and typically interact via the communication network. The relationship of the client and the server is generated by computer programs running on respective computers and having a client-server relationship with each other.

It should be understood that the steps can be reordered, added or deleted using the various flows illustrated above. For example, the steps described in the present application may be performed concurrently, sequentially or in a different order, so long as the desired results of the technical solutions disclosed in the present application can be achieved, and there is no limitation herein.

The above-described specific embodiments do not limit the scope of the present application. It will be apparent to those skilled in the art that various modifications, combinations, sub-combinations and substitutions are possible, depending on design requirements and other factors. Any modifications, equivalent substitutions, and improvements within the spirit and principles of this application are intended to be included within the scope of this application.

**Claims**

1. An image questioning and answering method, comprising:

   constructing (S10) a question graph with a topological structure and extracting a question feature of a query sentence, according to the query sentence;
   constructing (S20) a visual graph with a topological structure and a text graph with a topological structure according to a target image corresponding to the query sentence;
   performing (S30) fusion on the visual graph, the text graph and the question graph by using a fusion model, to obtain a final fusion graph; and
   determining (S40) reply information of the query sentence according to a reasoning feature extracted from the final fusion graph and the question feature.

2. The image questioning and answering method according to claim 1, wherein, the performing the fusion on the visual graph, the text graph and the question graph by using the fusion model, to obtain the final fusion graph, comprises:

   performing (S31) fusion on the visual graph and the text graph by using a first fusion model, to obtain a first fusion graph;
   performing (S32) fusion on the text graph and the question graph by using a second fusion model, to obtain a second fusion graph; and
   performing (S33) fusion on the first fusion graph and the second fusion graph by using a third fusion model, to obtain the final fusion graph.

3. The image questioning and answering method according to claim 1 or 2, wherein, constructing the question graph according to the query sentence, comprises:

   performing (S11) calculation on the query sentence by using a syntactic parsing algorithm, to determine edge relationships between respective word nodes which are composed of respective words in the query sentence;
   determining (S12) node features of the respective word nodes according to the query sentence; and
   constructing (S13) the question graph according to the node features of the respective word nodes and the edge relationships between the respective word nodes,
   preferably, the image questioning and answering method further comprises:
   performing (S50) updating on the node features of the respective word nodes by using a first coding model.

4. The image questioning and answering method according to any one of claims 1 to 3, wherein, constructing the visual graph according to the target image corresponding to the query sentence, comprises:

   recognizing (S21) respective targets included in the target image by using a target detection algorithm, and determining apparent features and spatial features of the respective targets;
   determining (S22) node features of respective visual graph nodes composed of the respective targets, according to the apparent features and the spatial features of the respective targets;
   determining (S23) edge relationships between the respective visual graph nodes according to overlapping degrees between the respective targets; and
   constructing (S24) the visual graph according to the node features of the respective visual graph nodes and the edge relationships between the respective visual graph nodes,
   preferably, the image questioning and answering method further comprises:

performing (S60) updating on the node features of the respective visual graph nodes by using a second coding model.

5. The image questioning and answering method according to any one of claims 1 to 4, wherein, constructing the text graph according to the target image corresponding to the query sentence, comprises:

determining (S25) label features of respective targets recognized in the target image and relationship features between the respective targets by using a visual relationship detection algorithm;
determining (S26) node features of respective text graph nodes composed of the respective targets, according to the label features of the respective targets and the relationship features between the respective targets;
determining (S27) edge relationships between the respective text graph nodes according to the relationship features between the respective targets; and
constructing (S28) the text graph according to the node features of the respective text graph nodes and the edge relationships between the respective text graph nodes,
preferably, the image questioning and answering method further comprises:
performing (S70) updating on the node features of the respective text graph nodes by using a third coding model.

6. The image questioning and answering method according to any one of claims 1 to 5, wherein, the determining the reply information of the query sentence according to the reasoning feature extracted from the final fusion graph and the question feature, comprises:
determining the reply information of the query sentence by using a multilayer perceptron, based on the reasoning feature extracted from the final fusion graph and the question feature.

7. An image questioning and answering apparatus, comprising:

a query sentence module (10) configured for constructing a question graph with a topological structure and extracting a question feature of a query sentence, according to the query sentence;
an image module (20) configured for constructing a visual graph with a topological structure and a text graph with a topological structure according to a target image corresponding to the query sentence;
a fusion module (30) configured for performing fusion on the visual graph, the text graph and the question graph by using a fusion model, to obtain a final fusion graph; and
a determining module (40) configured for determining reply information of the query sentence according to a reasoning feature extracted from the final fusion graph and the question feature.

8. The image questioning and answering apparatus according to claim 7, wherein, the fusion module comprises:

a first fusion sub-module configured for performing fusion on the visual graph and the text graph by using a first fusion model, to obtain a first fusion graph;
a second fusion sub-module configured for performing fusion on the text graph and the question graph by using a second fusion model, to obtain a second fusion graph; and
a third fusion sub-module configured for performing fusion on the first fusion graph and the second fusion graph by using a third fusion model, to obtain the final fusion graph.

9. The image questioning and answering apparatus according to claim 7 or 8, wherein, the query sentence module comprises:

a first determining sub-module configured for performing calculation on the query sentence by using a syntactic parsing algorithm, to determine edge relationships between respective word nodes which are composed of respective words in the query sentence;
a second determining sub-module configured for determining node features of the respective word nodes according to the query sentence; and
a first constructing sub-module configured for constructing the question graph according to the node features of the respective word nodes and the edge relationships between the respective word nodes,
preferably, the image questioning and answering apparatus further comprises:
a first updating module configured for performing updating on the node features of the respective word nodes by using a first coding model.

10. The image questioning and answering apparatus according to any one of claims 7 to 9, wherein, the image module comprises:

a third determining sub-module configured for recognizing respective targets included in the target image by using a target detection algorithm, and determining apparent features and spatial features of the respective targets;

a fourth determining sub-module configured for determining node features of respective visual graph nodes composed of the respective targets, according to the apparent features and the spatial features of the respective targets;

a fifth determining sub-module configured for determining edge relationships between the respective visual graph nodes according to overlapping degrees between the respective targets; and

a second constructing sub-module configured for constructing the visual graph according to the node features of the respective visual graph nodes and the edge relationships between the respective visual graph nodes, preferably, the image questioning and answering apparatus further comprises:

a second updating module configured for performing updating on the node features of the respective visual graph nodes by using a second coding model.

11. The image questioning and answering apparatus according to any one of claims 7 to 10, wherein, the image module comprises:

a sixth determining sub-module configured for determining label features of respective targets recognized in the target image and relationship features between the respective targets by using a visual relationship detection algorithm;

a seventh determining sub-module configured for determining node features of respective text graph nodes composed of the respective targets, according to the label features of the respective targets and the relationship features between the respective targets;

an eighth determining sub-module configured for determining edge relationships between the respective text graph nodes according to the relationship features between the respective targets; and

a third constructing sub-module configured for constructing the text graph according to the node features of the respective text graph nodes and the edge relationships between the respective text graph nodes, preferably, the image questioning and answering apparatus further comprises:

a third updating module configured for performing updating on the node features of the respective text graph nodes by using a third coding model.

12. The image questioning and answering apparatus according to any one of claims 7 to 11, wherein, the determining module comprises:
a ninth determining sub-module configured for determining the reply information of the query sentence by using a multilayer perceptron, based on the reasoning feature extracted from the final fusion graph and the question feature.

13. An electronic device, comprising:

at least one processor (1401); and
a memory (1402) communicatively connected to the at least one processor; wherein,
the memory stores instructions executable by the at least one processor, the instructions being executed by the at least one processor to enable the at least one processor to execute the image questioning and answering method according to any one of claims 1 to 6.

14. A non-transitory computer-readable storage medium storing computer instructions, the computer instructions causing a computer to execute the image questioning and answering method according to any one of claims 1 to 6.

15. A computer program product comprising computer program instructions, the computer program instructions, when executed by a computer, cause the computer to perform the image questioning and answering method according to any one of claims 1 to 6.

S10

constructing a question graph with a topological structure and extracting a question feature of a query sentence, according to the query sentence

S20

constructing a visual graph with a topological structure and a text graph with a topological structure according to a target image corresponding to the query sentence

S30

performing fusion on the visual graph, the text graph and the question graph by using a fusion model, to obtain a final fusion graph

S40

determining reply information of the query sentence according to a reasoning feature extracted from the final fusion graph and the question feature

**FIG. 1**

S11

performing calculation on the query sentence by using a syntactic parsing algorithm, to determine edge relationships between respective word nodes which are composed of respective words in the query sentence

S12

determining node features of the respective word nodes according to the query sentence

S13

constructing the question graph according to the node features of the respective word nodes and the edge relationships between the respective word nodes

**FIG. 2**

S11

performing calculation on the query sentence by using a syntactic parsing algorithm, to determine edge relationships between respective word nodes which are composed of respective words in the query sentence

S12

determining node features of the respective word nodes according to the query sentence

S13

constructing the question graph according to the node features of the respective word nodes and the edge relationships between the respective word nodes

S50

performing updating on the node features of the respective word nodes by using a first coding model

**FIG. 3**

node feature V      node feature X⁰'

fully graph convolution
connected layer   layer

graph convolution layer

question graph

node edge relationship E  Laplacian matrix L

association
layer

relation matrix A'

updated question graph

**FIG. 4**

S21

recognizing respective targets included in the target image by using a target detection algorithm, and determining apparent features and spatial features of the respective targets

S22

determining node features of respective visual graph nodes composed of the respective targets, according to the apparent features and the spatial features of the respective targets

S23

determining edge relationships between the respective visual graph nodes according to overlapping degrees between the respective targets

S24

constructing the visual graph according to the node features of the respective visual graph nodes and the edge relationships between the respective visual graph nodes

**FIG. 5**

S21

recognizing respective targets included in the target image by using a target detection algorithm, and determining apparent features and spatial features of the respective targets

S22

determining node features of respective visual graph nodes composed of the respective targets, according to the apparent features and the spatial features of the respective targets

S23

determining edge relationships between the respective visual graph nodes according to overlapping degrees between the respective targets

S24

constructing the visual graph according to the node features of the respective visual graph nodes and the edge relationships between the respective visual graph nodes

S60

performing updating on the node features of the respective visual graph nodes by using a second coding model

**FIG. 6**

S25

determining label features of respective targets
recognized in the target image and relationship
features between the respective targets by using a
visual relationship detection algorithm

S26

determining node features of respective text graph
nodes composed of the respective targets, according
to the label features of the respective targets and the
relationship features between the respective targets

S27

determining edge relationships between the
respective text graph nodes according to the
relationship features between the respective targets

S28

constructing the text graph according to the node
features of the respective text graph nodes and the
edge relationships between the respective text graph
nodes

FIG. 7

S25

determining label features of respective targets recognized in the target image and relationship features between the respective targets by using a visual relationship detection algorithm

S26

determining node features of respective text graph nodes composed of the respective targets, according to the label features of the respective targets and the relationship features between the respective targets

S27

determining edge relationships between the respective text graph nodes according to the relationship features between the respective targets

S28

constructing the text graph according to the node features of the respective text graph nodes and the edge relationships between the respective text graph nodes

S70

performing updating on the node features of the respective text graph nodes by using a third coding model

**FIG. 8**

S31

performing fusion on the visual graph and the text graph by using a first fusion model, to obtain a first fusion graph

S32

performing fusion on the text graph and the question graph by using a second fusion model, to obtain a second fusion graph

S33

performing fusion on the first fusion graph and the second fusion graph by using a third fusion model, to obtain the final fusion graph

**FIG. 9**

visual graph

graph match algorithm

matching matrix

attention map

fully connected layer

first fusion graph

text graph

**FIG. 10**

S10

constructing a question graph with a topological structure and extracting a question feature of a query sentence, according to the query sentence

S20

constructing a visual graph with a topological structure and a text graph with a topological structure according to a target image corresponding to the query sentence

S30

performing fusion on the visual graph, the text graph and the question graph by using a fusion model, to obtain a final fusion graph

S41

determining the reply information of the query sentence by using a multilayer perceptron, based on the reasoning feature extracted from the final fusion graph and the question feature

**FIG. 11**

**FIG. 12**

image questioning and answering apparatus

— 10

query sentence module

— 20

image module

— 30

fusion module

— 40

determining module

**FIG. 13**

memory — 1402

input device — 1403

bus

output device — 1404

processor — 1401

**FIG. 14**

Europäisches
Patentamt

European
Patent Office

Office européen
des brevets

## EUROPEAN SEARCH REPORT

Application Number

EP 21 27 5029

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI LINJIE ET AL: "Relation-Aware Graph Attention Network for Visual Question Answering", 2019 IEEE/CVF INTERNATIONAL CONFERENCE ON COMPUTER VISION (ICCV), IEEE, 27 October 2019 (2019-10-27), pages 10312-10321, XP033723674, DOI: 10.1109/ICCV.2019.01041 [retrieved on 2020-02-24] * abstract * * page 10312 - page 10317 * | 1-15 | INV. G06F16/583 G06F16/332 |
| A | HAO MA ET AL: "Bridging the Semantic Gap Between Image Contents and Tags", IEEE TRANSACTIONS ON MULTIMEDIA, IEEE SERVICE CENTER, US, vol. 12, no. 5, 1 August 2010 (2010-08-01), pages 462-473, XP011346696, ISSN: 1520-9210, DOI: 10.1109/TMM.2010.2051360 * the whole document * | 1-15 | |
| A | EP 3 166 049 A1 (BAIDU USA LLC [US]) 10 May 2017 (2017-05-10) * abstract * * paragraph [0028] - paragraph [0042]; figures 2-5 * | 1-15 | TECHNICAL FIELDS SEARCHED (IPC) G06F |
| A | CN 110 555 153 A (UNIV JINAN) 10 December 2019 (2019-12-10) * the whole document * | 1-15 | |

The present search report has been drawn up for all claims

| Place of search | Date of completion of the search | Examiner |
|---|---|---|
| Berlin | 20 August 2021 | Barieux, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 27 5029

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2021

| Patent document cited in search report | | Publication date | Patent family member(s) | | Publication date |
|---|---|---|---|---|---|
| EP 3166049 | A1 | 10-05-2017 | CN | 106649542 A | 10-05-2017 |
| | | | EP | 3166049 A1 | 10-05-2017 |
| | | | JP | 6351689 B2 | 04-07-2018 |
| | | | JP | 2017091525 A | 25-05-2017 |
| | | | KR | 20180038937 A | 17-04-2018 |
| | | | US | 2017124432 A1 | 04-05-2017 |
| CN 110555153 | A | 10-12-2019 | NONE | | |

EPO FORM P0459

For more details about this annex : see Official Journal of the European Patent Office, No. 12/82